# EUROPEAN PATENT APPLICATION

(11) **EP 3 929 721 A1**
(43) Date of publication of application: **29.12.2021**
(21) Application number: 21179860.8
(22) Date of filing: 16.06.2021
(51) Int. Cl.: G06F 3/12, G06N 3/02, G06F 11/30

(54) **PRINT SYSTEM**

(30) Priority: 23.06.2020 JP 2020107789
(71) Applicant: Roland DG Corporation, Shizuoka 431-2103 (JP)
(72) Inventor: ADACHI, Takashi, Shizuoka-ken, 431-2103 (JP); NIHASHI, Hirohito, Shizuoka-ken, 431-2103 (JP); SUKSIRI, Bandhit, Shizuoka-ken, 431-2103 (JP)
(74) Representative: Grünecker Patent- und Rechtsanwälte PartG mbB

(57) **Abstract**

A print system 10 includes a printer 20 including an ink head 22 from which ink is discharged onto a recording medium 5, and a management computer 70 communicably connected to the printer 20. The management computer 70 includes a receiver 83 to receive operating condition information of the printer 20 from the printer 20, a predictor 84 to predict whether maintenance work of the printer 20 is necessary or not based on the operating condition information received by the receiver 83, and a notifier 85 to notify at least one of a user US of the printer 20, a service engineer SE, and a call center CC if the predictor 84 predicts that the maintenance work is necessary.

## Description

### CROSS REFERENCE TO RELATED APPLICATIONS

This application claims the benefit of priority to Japanese Patent Application No. 2020-107789 filed on June 23, 2020. The entire contents of this application are hereby incorporated herein by reference.

### BACKGROUND OF THE INVENTION

### 1. Field of the Invention

The present teaching relates to a print system.

### 2. Description of the Related Art

There has been known a printer capable of printing an image on a long recording medium. For example, JP2019-166792A discloses a so-called roll-to-roll type ink printer including a platen on which a long recording medium is placed, a conveyor that conveys a recording medium, and an ink head from which ink is discharged onto the recording medium.

Such a printer needs regular maintenance work in order to maintain print quality. Examples of the maintenance work include cleaning of the ink head and replacement of consumable goods for which replacement conditions have been set in advance. Cleaning of the ink head can prevent clogging of nozzles from which ink is discharged. Most types of cleaning are automatically performed in printers in general, but some types of cleaning are manually performed by users. The timing of manual cleaning varies depending on operating conditions of a printer, and thus, cleaning might be performed inappropriately.

Although general printers issue notification of replacement of consumable goods, this notification is issued at the time when replacement becomes necessary. Thus, if consumable goods are not available on hand even when notification of replacement is issued, printing is unintentionally interrupted, disadvantageously. In addition, for some components of a printer, replacement conditions are not set in advance unlike consumable goods, and replacement is necessary in some operating conditions of the printer. Examples of such components include an ink head. In conventional techniques, it has been difficult to predict a failure of an ink head, and measures such as replacement or repair are performed after occurrence of a failure. The ink head herein is a part that cannot be replaced by a user, unlike consumable goods, and thus, is replaced by a service engineer. Thus, once a malfunction occurs in the ink head, a long time can be needed before a print operation is restored, disadvantageously.

### SUMMARY OF THE INVENTION

Preferred embodiments of the present invention provide print systems each capable of determining an occurrence of malfunction of a printer in advance and preventing or reducing the occurrence of the defect.

A print system according to a preferred embodiment of the present teaching includes a printer including an ink head from which ink is discharged onto a recording medium to print an image on the recording medium; and a management computer communicably connected to the printer. The management computer is configured or programmed to include a receiver to receive operating condition information of the printer from the printer, a predictor to predict whether maintenance work of the printer is necessary or not, based on the operating condition information received by the receiver, and a notifier to notify at least one of a user of the printer, a service engineer, and a call center that the maintenance work is necessary if the predictor predicts that the maintenance work is necessary.

In a print system according to a preferred embodiment of the present teaching, the predictor of the management computer predicts whether maintenance work of the printer is necessary or not, based on the operating condition information received by the receiver. As described above, since the operating condition information of the printer in use is constantly received by the receiver, the predictor is able to predict whether maintenance is necessary or not depending on the operating condition information of the printer in use. Then, if the predictor predicts that maintenance work is necessary, the notifier notifies at least one of the user, the service engineer, and the call center of the prediction result. Accordingly, the notified user, for example, can determine a necessity of maintenance work before an occurrence of a malfunction in the printer, and thus, the user performs maintenance work by themselves or requests the service engineer for maintenance work to prevent or reduce the occurrence of a malfunction in the printer.

Preferred embodiments of the present teaching provide print systems each capable of determining possible an occurrence of malfunction of a printer in advance and preventing or reducing the occurrence of the malfunction.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a conceptual illustration of a print system according to a preferred embodiment of the present invention.
FIG. 2 is a block diagram of a print system according to a preferred embodiment of the present invention.
FIG. 3 is a flowchart depicting a procedure of predicting a failure of a second part by using a print system.

### DETAILED DESCRIPTION OF THE PREFERRED EMBODIMENTS

Print systems according to preferred embodiments of the present teaching will be described with reference to the drawings. The preferred embodiments described herein are, of course, not intended to particularly limit the present teaching.

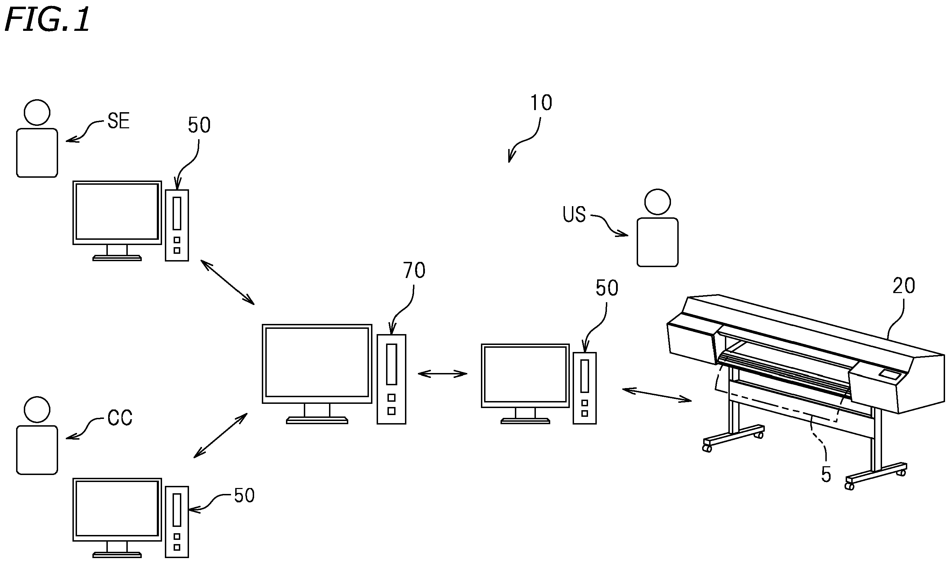

As illustrated in FIG. 1, a print system 10 includes a printer 20, a terminal device 50, and a management device 70. The print system 10 is a system that predicts the necessity of maintenance work of the printer 20. The print system 10 is a system to prevent or reduce an occurrence of malfunction of the printer 20.

In the print system 10 according to the present preferred embodiment, a user US has the printer 20. The printer 20 is communicably connected to the management device 70. The printer 20 herein is communicably connected to the management device 70 through the terminal device 50 of the user US. The printer 20 may be communicably connected directly to the management device 70 without the use of the terminal device 50 of the user US. A terminal device 50 of a service engineer SE and a terminal device 50 of a call center CC are communicably connected to the management device 70.

The printer 20 is a device to print an image on a recording medium 5. Examples of the printer 20 include an ink jet printer to perform printing of a predetermined image on a surface of the recording medium 5 by an ink jet technique. A composition of ink discharged from the printer 20 is not limited to a specific material, and various compositions conventionally used as ink of ink jet printers may be used. The ink may be, for example, solvent-based pigment ink, aqueous pigment ink, or may be aqueous ink or UV curable pigment ink (so-called UV ink) that cures under UV application, for example. Examples of the printer 20 include a so-called roll-to-roll type ink printer and a so-called flat-bed printer. In the print system 10 of this preferred embodiment, the user US has a roll-to-roll type ink printer 20.

The recording medium 5 (see FIG. 1) may be, for example, a flat sheet such as a rolled recording sheet (e.g., rolled medium) or a three-dimensional object such as various types of cases including a cellular phone case, a small electronic device, small articles including a keyholder, a photo frame, and a pen, an everyday item, or an accessory. A material for the recording medium 5 may be, as well as papers such as plain paper, drawing paper, Japanese paper, and ink jet printing paper, a resin material such as polyvinyl chloride (PVC), polyethylene terephthalate (PET), acrylic resin, polycarbonate (PC), polystyrene, or acrylonitrile butadiene styrene (ABS) copolymer, a metal material such as gold, silver, copper, platinum, brass, aluminum, iron, titanium, or stainless, cloth such as natural fibers typified by hemp or silk or chemical fibers typified by nylon or polyester, carbon, a ceramic, ceramic, glass, rubber, leather, a wood plate, and so forth. In the case of printing an image on a flat sheet, for example, a roll-to-roll type ink printer is used, whereas in the case of printing an image on a three-dimensional object, a flat-bed type printer is used.

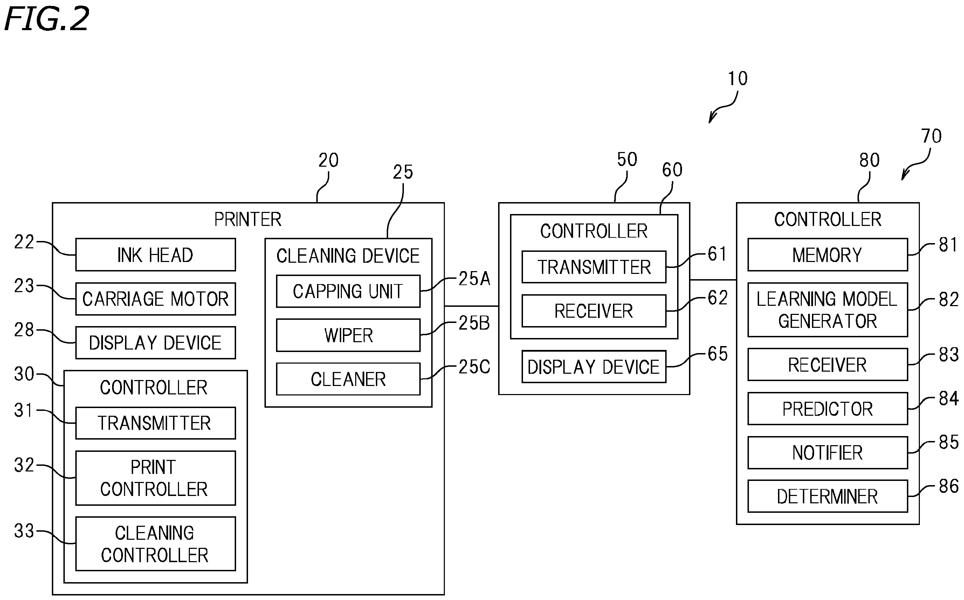

As illustrated in FIG. 2, the printer 20 includes an ink head 22 from which ink is discharged onto the recording medium 5 (see FIG. 1), a carriage motor 23 to drive a carriage that moves the ink head 22 in a main scanning direction, a cleaning device 25 to clean the ink head 22, and a display (e.g., display panel) 28 to display a state of the printer 20.

As illustrated in FIG. 2, the printer 20 includes a controller 30. The controller 30 is configured or programmed to perform control regarding printing of an image on the recording medium 5. The controller 30 includes a microcomputer and disposed inside a body. The controller 30 includes, for example, a central processing unit (CPU), a ROM to store, for example, a program to be executed by the CPU, and a RAM. In this preferred embodiment, a program stored in the microcomputer is used to perform control on printing of an image on the recording medium 5.

As illustrated in FIG. 2, the controller 30 is configured or programmed to include a transmitter 31, a print controller 32, and a cleaning controller 33. Functions of components of the controller 30 are implemented by a program. This program is read from a recording medium such as a CD and a DVD. This program may be downloaded through the Internet. Functions of components of the controller 30 may be implemented by a processor and/or a circuit, for example.

The transmitter 31 transmits operating condition information of the printer 20 to the management device 70. For example, the transmitter 31 transmits the operating condition information of the printer 20 to the management device 70 through the terminal device 50. The operating condition information includes a current status of the printer 20 (e.g., during printing, standby for printing, powered off) and an operating time of the printer 20 per a unit time (e.g., per one day or per one week). The operating condition information can include all the information of the printer, such as setting information of the printer 20, adjustment position information (e.g., set values adjustable by the service engineer SE) at shipment of the printer 20, replacement result information of components of the printer 20, start times and end times of printing and cleaning, operation details and the number of operations in printing and cleaning, various types of information regarding the occurrence of a malfunction of the printer 20. The operating condition information includes ink information used in the printer 20, internal temperature information of the inside of the printer 20, and material information of a material for the recording medium 5 used in the printer 20. The ink information and the material information may be input beforehand by a user of the printer 20, or may be automatically identified in the printer 20. The operating condition information includes environment information of a place in which the printer 20 is installed. The environment information includes external temperature information of the outside of the printer 20 and peripheral humidity information of the printer 20. The environment information may include information on a material of the floor (or base) on which the printer 20 is installed.

The print controller 32 is configured or programmed to control the ink head 22 and the carriage motor 23 and to print an image on the recording medium 5. The ink head 22 and the carriage motor 23 are examples of a second part. The second part includes a part for which replacement conditions are set in advance and a part for which replacement conditions are not set in advance. The second part is a part replaceable by the service engineer SE. The second part may be a part replaceable by the user US or a part irreplaceable by the user US.

The cleaning controller 33 is configured or programmed to control the cleaning device 25 to perform cleaning of the ink head 22. As illustrated in FIG. 2, the cleaning device 25 includes, for example, a cap 25A to cause ink to be forcibly discharged from nozzles (not shown) of the ink head 22, a wiper 25B to wipe a nozzle surface (not shown) where nozzles are located, and a cleaner 25C, such as a sponge, to remove ink adhering to the wiper 25B. The wiper 25B and the cleaner 25C are examples of a first part. For the first part, replacement conditions are set in advance. The first part is a part replaceable by the user US.

Next, the terminal device 50 according to this preferred embodiment will be described. As illustrated in FIG. 1, the terminal device 50 is communicably connected to the management device 70. The terminal device 50 of the user US is communicably connected to the printer 20. In the example illustrated in FIG. 1, the terminal device 50 of the user US is connected to one printer 20, but may be connected to a plurality of printers 20.

As illustrated in FIG. 2, the terminal device 50 includes the controller 60 and the display 65. The controller 60 is configured or programmed to transmit and receive predetermined information to and from the management device 70 and the printer 20. A configuration of the controller 60 is similar to that of the controller 30 of the printer 20. The display 65 is capable of displaying information of the printer 20.

The controller 60 is configured or programmed to include a transmitter 61 and a receiver 62. Functions of components of the controller 60 are implemented by a program. This program is read from a recording medium such as a CD and a DVD. This program may be downloaded through the Internet. Functions of components of the controller 60 may be implemented by a processor and/or a circuit, for example.

The transmitter 61 of the terminal device 50 of the user US transmits operating condition information of the printer 20 to the management device 70. The transmitter 61 may transmit necessity of maintenance work of the printer 20 to the printer 20, which will be described later. The terminal device 50 of the service engineer SE and the transmitter 61 of the controller 60 of the terminal device 50 of the call center CC transmit, for example, work reports to the management device 70.

The receiver 62 of the terminal device 50 of the user US receives operating condition information of the printer 20. The receivers 62 of the terminal devices 50 of the user US, the service engineer SE, and the call center CC receive a notification signal from a notifier 85 of the management device 70, and causes the display device 65 to display the necessity of maintenance work.

The management device 70 according to this preferred embodiment will now be described. The management device 70 is implemented by, for example, a personal computer. The management device 70 may be implemented by a general-purpose computer, or by a dedicated computer. The management device 70 may also be a server provided in a so-called client server environment. The management device 70 may be a cloud server provided in a so-called cloud computing environment.

As illustrated in FIG. 2, the management device 70 includes the controller 80. The controller 80 is configured or programmed to include a memory 81, a learning model generator 82, a receiver 83, a predictor 84, the notifier 85, and a determiner 86. In a case where the management device 70 is a server provided a client server environment, functions of components of the controller 80 are implemented by a program installed in the server, for example. In the case where the management device 70 is a cloud server, functions of components of the controller 80 are implemented by a program on the cloud, for example.

The memory 81 stores printer information of the printer 20. The printer information includes at least a type (model) of the printer 20 and replacement conditions of the first part of the printer 20. For example, when a new printer 20 is communicably connected to the management device 70, the memory 81 stores printer information of the new printer 20. The printer information may be directly transmitted to the management device 70 from the printer 20 or indirectly transmitted to the management device 70 through the terminal device 50. The memory 81 stores operating condition information of the printer 20. The memory 81 stores cleaning result information (e.g., the number of times of cleaning or a period when last cleaning was performed) of the ink head 22 of the printer 20. The memory 81 stores a learning model to predict a failure of the second part, which will be described later.

The learning model generator 82 generates a learning model to predict a failure of the second part (e.g., the ink head 22). The learning model generator 82 provides learning by using training data whose output is a failure of the second part and whose input is operating condition information of another printer of the same type as the printer 20 (e.g., various types of information of the printer when the second part is normal, various types of information of the printer when a failure occurs in the second part, and replacement result information of the second part). The learning model generator 82 causes a neural network to learn by using training data described above, for example. When the operating condition information of the printer 20 is input to the learned model, the learning model outputs a probability of failure of the second part. Examples of the various types of information of the printer used in generating the learning model herein include parameters unique to the second part, a cumulative operating time of the second part, setting information of the printer, temperature information of the second part, and maintenance result information. The learning model generator 82 also performs the function of additional learning by adding operating condition information of the printer 20 to the generated learning model.

The receiver 83 receives the operating condition information of the printer 20 from the printer 20. The receiver 83 may receive the operating condition information constantly or regularly (with every predetermined time interval). The receiver 83 is an example of the receiver.

The predictor 84 predicts whether maintenance work of the printer 20 is necessary or not, based on the operating condition information of the printer 20 received by the receiver 83. In a case where maintenance work includes a replacement of the first part (e.g., the wiper 25B), the predictor 84 predicts whether replacement of the first part is necessary or not, based on the operating condition information of the printer 20 received by the receiver 83 and the replacement conditions stored in the memory 81. The predictor 84 predicts how many times the first part is to be used before replacement, based on the number of times of use of the first part and the number of possible times of use defined in the replacement conditions, for example. In a case where the maintenance work includes replacement of the second part (e.g., the ink head 22), the predictor 84 inputs the operating condition information of the printer 20 received by the receiver 83 to the learning model stored in the memory 81, outputs a probability of a failure of the second part from the learning model, and if the probability is higher than a predetermined threshold, predicts that replacement of the second part is necessary.

If the predictor 84 detects that maintenance work of the printer 20 is necessary, the notifier 85 notifies at least one of the user US, the service engineer SE, and the call center CC that maintenance work of the printer 20 is necessary. If the predictor 84 predicts that replacement of the first part (e.g., the wiper 25B) is necessary, the notifier 85 notifies at least the user US that replacement of the first part is necessary (this process will be referred to as a preventive measure). If the predictor 84 predicts that replacement of the second part (e.g., the ink head 22) is necessary, the notifier 85 notifies at least one of the user US, the service engineer SE, and the call center CC that replacement of the second part is necessary (this process will be referred to as failure prediction). If the determiner 86 determines that cleaning is necessary, the notifier 85 notifies at least the user US that cleaning of the ink head 22 is necessary. The notifier 85 issues a notification signal to the terminal device 50. Once the terminal device 50 has received the notification signal, a notification process is performed in the terminal device 50. The notification signal may be transmitted directly to the printer 20. The technique of the notification process is not specifically limited, and examples of this technique include warning by visual display (waning display) and sound (warning sound). In this preferred embodiment, the notifier 85 issues notification that maintenance work is necessary through the display device 65 of the terminal device 50. The notifier 85 may perform the notification described above to the user US through the display device 28 of the printer 20. By notifying the user US that maintenance work is necessary, the user US is able to take various measures (e.g., replacement of parts, cleaning, contact to the service engineer SE and/or the call center CC in advance) before a malfunction occurs in the printer 20. By notifying the service engineer SE and/or the call center CC that maintenance work is necessary, the service engineer SE and/or the call center CC is/are able to arrange a schedule for replacement of parts of the printer 20 in consultation with the user US, for example. The notifier 85 can also notify the user US of replacement result information of the second part by the service engineer SE and statistical information of use situation of the printer 20.

In a case where the maintenance work is cleaning of the ink head 22, the determiner 86 determines whether cleaning of the ink head 22 is necessary or not, based on the operating condition information of the printer 20 received by the receiver 83 and cleaning result information of the ink head 22. If a predetermined time has elapsed from last cleaning of the ink head 22 or if a cumulative print time from last cleaning of the ink head 22 exceeds a predetermined time, the determiner 86 determines that cleaning of the ink head 22 is necessary.

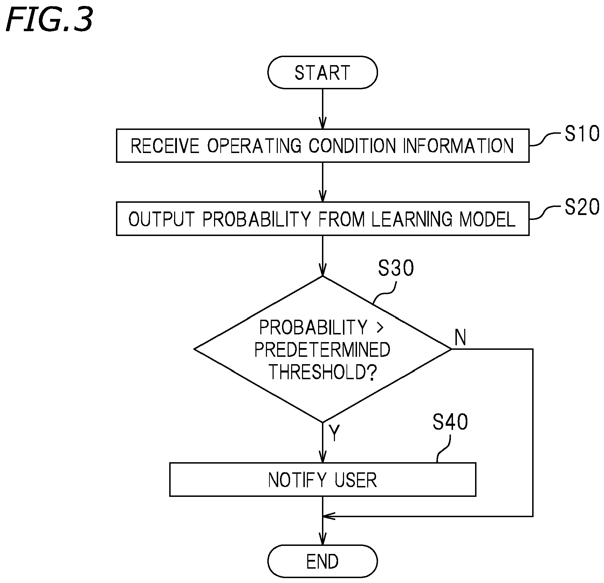

A procedure of predicting a failure of the second part by using the print system 10 will now be described. FIG. 3 is an example of a flowchart depicting a procedure of predicting a failure of the second part by using the print system 10. In this preferred embodiment, prediction of a failure of the ink head 22 of the printer 20 of the user US as the second part will be described as an example.

In step S10, the transmitter 31 of the printer 20 transmits operating condition information of the printer 20 to the management device 70. The receiver 83 of the management device 70 receives the operating condition information of the printer 20.

In step S20, the predictor 84 inputs the operating condition information of the printer 20 received by the receiver 83 to a learning model stored in the memory 81, and outputs a probability of a failure of the second part from the learning model.

In step S30, the predictor 84 determines whether the output probability is higher than a predetermined threshold or not. If the output probability is higher than the predetermined threshold, the predictor 84 predicts that replacement of the second part is necessary, and the process proceeds to step S40. On the other hand, if the output probability is the predetermined threshold or less, the predictor 84 predicts that replacement of the second part is not necessary, and the prediction process is finished.

In step S40, the notifier 85 notifies the user US that replacement of the second part of the printer 20 is necessary, in advance. At this time, the notifier 85 notifies the user US through the display 65 of the terminal device 50 communicably connected to the printer 20, for example. The notified user US can contact the service engineer SE or the call center CC before occurrence of a failure of the second part. Accordingly, the second parts can be replaced before a failure of the second part occurs, and a period in which the printer 20 cannot be used can be reduced.

As described above, in the print system 10 according to this preferred embodiment, the predictor 84 of the management device 70 predicts whether maintenance work of the printer 20 is necessary or not, based on the operating condition information of the printer 20 received by the receiver 83. In this manner, since the operating condition information of the printer 20 in use is constantly received by the receiver 83, the predictor 84 can predict whether maintenance work is necessary or not depending on the operating condition information of the printer 20 in use. Then, if the predictor 84 predicts that maintenance work is necessary, the notifier 85 notifies at least one of the user US, the service engineer SE, and the call center CC of the prediction result. Accordingly, the notified user US, for example, can recognize that maintenance work is necessary before a malfunction occurs in the printer 20, and thus, performs the maintenance work by themselves or requests the service engineer SE for maintenance work. In this manner, occurrence of a malfunction in the printer 20 can be suppressed.

In the print system 10 according to this preferred embodiment, the predictor 84 predicts whether replacement of the first part is necessary or not, based on the operating condition information of the printer 20 received by the receiver 83 and replacement conditions of the first part (e.g., the wiper 25B) stored in the memory 81. As described above, since the operating condition information of the printer 20 in use is constantly received by the receiver 83, the predictor 84 is capable of predicting whether replacement of the first part is necessary or not based on the operating condition information of the printer 20 in use. Then, if the predictor 84 predicts that replacement of the first part is necessary, the notifier 85 notifies at least the user US of this prediction result. Here, since the first part is replaceable by the user US, the notified user US can recognize the necessity of replacement of the first part before a malfunction occurs in the first part, and the user US can replace the first part by themselves.

In the print system 10 according to this preferred embodiment, the first part is a part for use in cleaning of the ink head 22 (e.g., the wiper 25B or the cleaner 25C). Since parts necessary for cleaning can be replaced when necessary, cleaning of the ink head 22 can be appropriately performed.

In the print system 10 according to this preferred embodiment, a learning model is generated based on, for example, information collected from other printers and replacement result information of the second part (e.g., the ink head) so that feature representation effective to predict a malfunction of the second part can be obtained. Accordingly, a failure prediction of the second part can be accurately performed. In addition, since operating condition information of the printer 20 in use is constantly received by the receiver, a probability of failure of the second part (e.g., the ink head 22) can be output in real time. Then, if the predictor 84 predicts that replacement of the second part is necessary based on the probability higher than the predetermined threshold, the notifier 85 notifies the user US, for example, of this prediction result. In this preferred embodiment, since the second part is replaceable by the service engineer SE, the notified user US, for example, can recognize that replacement of the second part is necessary before a malfunction occurs in the second part, and can request the service engineer SE and/or the call center CC for replacement of the second part.

In the print system 10 according to this preferred embodiment, the second part is the ink head 22. Since the ink head 22 can be replaced at an appropriate timing before occurrence of a failure, long-term interruption of printing can be prevented or reduced.

In the print system 10 according to this preferred embodiment, the determiner 86 determines whether cleaning of the ink head 22 is necessary or not, based on the operating condition information of the printer 20 received by the receiver 83 and the cleaning result information of the ink head 22. Then, if the determiner 86 determines that cleaning is necessary, the notifier 85 notifies the user US that cleaning of the ink head 22 is necessary. As described above, since the user US is notified of a timing at which cleaning becomes necessary in advance, the user US does not need to check the operating condition information of the printer 20 constantly, and can perform cleaning of the ink head 22 at an appropriate timing.

The foregoing description is directed to the preferred embodiments of the present teaching. The preferred embodiments described above, however, are merely examples, and the present teaching can be performed in various modes.

If the predictor 84 does not predict that maintenance work is necessary, the notifier 85 may notify the user US, for example, that the printer 20 operates normally through the display 65 of the terminal device 50

## Claims

1. A print system (10) comprising:
a printer (20) including an ink head (22) from which ink is discharged onto a recording medium (5) to print an image on the recording medium (5); and
a management computer (70) communicably connected to the printer (20); wherein
the management computer (70) is configured or programmed to include:
a receiver (83) to receive operating condition information of the printer (20) from the printer (20);
a predictor (84) to predict whether maintenance work of the printer (20) is necessary or not, based on the operating condition information received by the receiver (83); and
a notifier (85) to notify at least one of a user (US) of the printer (20), a service engineer (SE), and a call center (CC) that the maintenance work is necessary if the predictor (84) predicts that the maintenance work is necessary.

2. The print system (10) according to claim 1, wherein
in a case where the maintenance work includes replacement of a first part of the printer (20), a replacement condition of the first part is set in advance, and the first part is replaceable by the user (US);
the management computer (70) includes a memory (81) to store the replacement condition;
the predictor (84) predicts whether replacement of the first part is necessary or not, based on the operating condition information received by the receiver (83) and the replacement condition; and
the notifier (85) notifies at least the user (US) that replacement of the first part is necessary, if the predictor (84) predicts that replacement of the first part is necessary.

3. The print system (10) according to claim 2, wherein the first part is usable to clean the ink head (22).

4. The print system (10) according to claim 1, wherein
in a case where the maintenance work includes replacement of a second part of the printer (20) and a replacement condition of the second part is not set in advance or in a case where the maintenance work is replacement of the second part and the second part is replaceable by the service engineer (SE);
the management computer (70) includes a memory (81) to store a learning model to predict a failure of the second part;
the predictor (84) predicts that replacement of the second part is necessary if the operating condition information received by the receiver (83) is input to the learning model, a probability of a failure of the second part is output from the learning model, and the probability is higher than a predetermined threshold; and
the notifier (85) notifies at least one of the user (US), the service engineer (SE), and the call center (CC) that replacement of the second part is necessary if the predictor (84) predicts that replacement of the second part is necessary.

5. The print system (10) according to claim 4, wherein the second part includes the ink head (22).

6. The print system (10) according to any one of claims 1 to 5, wherein
in a case where the maintenance work includes cleaning of the ink head (22);
the management computer (70) includes a determiner (86) to determine whether cleaning of the ink head (22) is necessary or not, based on the operating condition information received by the receiver (83) and cleaning result information of the ink head (22); and
the notifier (85) notifies at least the user (US) that cleaning of the ink head (22) is necessary if the determiner (86) determines that cleaning is necessary.
